# EUROPÄISCHE PATENTANMELDUNG

(11) **EP 2 226 535 A1**
(43) Veröffentlichungstag der Anmeldung: **08.09.2010**
(21) Anmeldenummer: 09003322.6
(22) Anmeldetag: 06.03.2009
(51) Int. Cl.: F16J 15/44, F01D 11/00, F01D 11/02

(54) **Labyrinthdichtungsbuchse für eine Strömungsmaschine und Verfahren zur Montage einer Labyrinthdichtung mit der Labyrinthdichtungsbuchse**

(71) Anmelder: Siemens Aktiengesellschaft, 80333 München (DE)
(72) Erfinder: Pieper, Norbert, 47178 Duisburg (DE); Sievert, Roland, Dr., 45147 Essen (DE)

(57) **Zusammenfassung**

Eine Labyrinthdichtungsbuchse (5) für eine Strömungsmaschine (1) weist einen Labyrinthdichtungsträgerring (6), der an seiner Innenseite einen umlaufenden, radial nach innen sich erstreckenden Flansch (7) aufweist, und einen Labyrinthdichtungsring (11) auf, der über den Umfang aus mindestens einem Segment (12) zusammengesetzt ist, wobei das Segment (12) des Labyrinthdichtungsrings (11) seitlich an dem Flansch (7) radial verschiebbar anliegt, wodurch das Segment (12) in eine Betriebsstellung (19) und in eine Montagestellung (20) bringbar ist, in der das Segment (12) bezogen auf die Betriebsstellung (19) radial nach außen versetzt ist, und an dem Labyrinthdichtungsträgerring (6) mit einem Vorspannmittel (15) radial nach innen vorgespannt abgestützt ist, wobei der Flansch (7) ein in Axialrichtung sich erstreckendes Durchgangsloch (16) und der Labyrinthdichtungsring (11) ein Steckloch (17) aufweisen, das in der Montagestellung (20) mit dem Durchgangsloch (16) fluchtend und in der Betriebsstellung (19) bezogen auf das Durchgangsloch (16) radial nach innen versetzt angeordnet ist, so dass mittels eines Bolzens (18), der in das Durchgangsloch (16) und das Steckloch (17) gesteckt ist, das Segment (12) in der Montagestellung (20) gehalten ist und, wenn der Bolzen (18) aus dem Steckloch (17) entfernt ist, das Segment (12) von dem Vorspannmittel in die Betriebsstellung (19) gedrückt ist.

## Beschreibung

Die Erfindung betrifft eine Labyrinthdichtungsbuchse für eine Strömungsmaschine, die Strömungsmaschine mit der Labyrinthdichtungsbuchse und ein Verfahren zur Montage einer Labyrinthdichtung, die die Labyrinthdichtungsbuchse aufweist.

Eine Strömungsmaschine, beispielsweise eine Dampfturbine, weist ein Gehäuse und einen Läufer auf, der in dem Gehäuse drehbar gelagert ist. Beim Betrieb der Dampfturbine tritt in das Gehäuse Dampf ein, dessen Enthalpie an einer Beschaufelung des Läufers abgebaut wird, so dass der Läufer drehangetrieben wird. Der Läufer weist eine Welle auf, die an ihren Längsenden mit jeweils einem Lager gelagert ist, das außerhalb des Gehäuses vorgesehen ist. Da die Welle beim Betrieb der Dampfturbine relativ zu dem Gehäuse sich bewegt, ist ein Spalt zwischen der Welle und dem Gehäuse vorgesehen, so dass die Welle an das Gehäuse nicht anstreifen kann. Durch den Spalt stellt sich aufgrund des Überdrucks des Dampfs innerhalb des Gehäuses eine Leckageströmung ein. Es wird angestrebt diesen Spalt möglichst effektiv abzudichten, so dass die Leckage möglichst gering ist.

Herkömmlich ist in dem Spalt zur Reduktion der Leckage beispielsweise eine berührungsfreie Dichtung vorgesehen. Im stationären Betrieb der Dampfturbine ist die Weite des Spalts über die Zeit im Wesentlichen konstant. Erstrebenswert ist es, dass die Dichtung eine möglichst starke Abdichtwirkung hat, damit der Wirkungsgrad der Dampfturbine hoch ist. Allerdings kann sich bei instationären Betriebszuständen der Dampfturbine die Weite des Spalts verändern, wobei ein Anstreifen der Dichtung unterbunden sein soll. Dem entgegenzuwirken kann die Dichtung radial verstellbar eingerichtet sein, so dass eine Labyrinthdichtung sowohl für stationäre als auch für instationäre Betriebszustände gleichermaßen gut geeignet ist. Es ist bekannt federnde Labyrinthdichtsegmente in Nuten zu lagern, die in dem Gehäuse eingebracht sind, wobei die Oberfläche der Welle, an der die Labyrinthdichtsegmente abdichten, glatt ausgebildet ist. Um die Labyrinthdichtung ohne eine Teilfuge konstruktiv realisieren zu können, ist es bekannt, die Labyrinthdichtung in ein separates Wellendichtungsgehäuse einzubauen. Herkömmlich sind diese Labyrinthdichtungen als eine Durchblickdichtung oder eine Spitze-Spitze-Dichtung ausgeführt, die ein großes radiales Spiel haben, damit das Wellendichtungsgehäuse mit der darin eingebauten Labyrinthdichtung durch Aufschieben auf die Welle montierbar ist. Jedoch hat die Durchblickdichtung und die Spitze-Spitze-Dichtungen aufgrund des großen Radialspiels eine schlechte Dichtwirkung, wodurch der Wirkungsgrad der Dampfturbine beeinträchtigt ist.

Aufgabe der Erfindung ist es eine Labyrinthdichtungsbuchse für eine Strömungsmaschine, eine Strömungsmaschine mit der Labyrinthdichtungsbuchse und ein Verfahren zur Montage einer Labyrinthdichtung mit der Labyrinthdichtungsbuchse zu schaffen, wobei die Strömungsmaschine mit der Labyrinthdichtungsbuchse einen hohen Wirkungsgrad hat.

Die erfindungsgemäße Labyrinthdichtungsbuchse für eine Strömungsmaschine weist einen Labyrinthdichtungsträgerring, der an seiner Innenseite einen umlaufenden, radial nach innen sich erstreckenden Flansch aufweist, und einen Labyrinthdichtungsring auf, der über den Umfang aus mindestens einem Segment zusammengesetzt ist, wobei das Segment des Labyrinthdichtungsrings seitlich an dem Flansch radial verschiebbar anliegt, wodurch das Segment in eine Betriebsstellung und in eine Montagestellung bringbar ist, in der das Segment bezogen auf die Betriebsstellung radial nach außen versetzt ist, und an dem Labyrinthdichtungsträgerring mit einem Vorspannmittel radial nach innen vorgespannt abgestützt ist, wobei der Flansch ein in Axialrichtung sich erstreckendes Durchgangsloch und der Labyrinthdichtungsring ein Steckloch aufweisen, das in der Montagestellung mit dem Durchgangsloch fluchtend und in der Betriebsstellung bezogen auf das Durchgangsloch radial nach innen versetzt angeordnet ist, so dass mittels eines Bolzens, der in das Durchgangsloch und das Steckloch gesteckt ist, das Segment in der Montagestellung gehalten ist und, wenn der Bolzen aus dem Steckloch entfernt ist, das Segment von dem Vorspannmittel in die Betriebsstellung gedrückt ist. Bevorzugtermaßen sind das Durchgangsloch und das Steckloch in der Betriebsstellung derart zueinander versetzt angeordnet sind, so dass das Durchgangsloch und das Steckloch sich nicht überlappen, wobei an dem Steckloch eine Aussparung zum Führen des Bolzens in das Steckloch vorgesehen ist.

Die erfindungsgemäße Strömungsmaschine mit einem Gehäuse weist die Labyrinthdichtungsbuchse und eine Welle mit einer Dichtungsfläche auf, die zusammen mit der Labyrinthdichtungsbuchse eine Labyrinthdichtung bildet, wobei die Labyrinthdichtungsbuchse radial nach innen sich erstreckende und umlaufende Dichtspitzen aufweist, die den radial nach außen sich erstreckenden und umlaufenden Dichtspitzen der Dichtungsfläche zugewandt angeordnet sind, wobei die Dichtspitzen der Labyrinthdichtungsbuchse mit denen der Dichtungsfläche in der Montagestellung außer Eingriff stehen und in der Betriebsstellung in Eingriff stehen.

Das erfindungsgemäße Verfahren zur Montage der Labyrinthdichtung der Strömungsmaschine weist die Schritte auf: Bereitstellen der Labyrinthdichtungsbuchse und der Welle mit der Dichtungsfläche; Einschieben des Bolzens in das Durchgangsloch des Flansches und des Stecklochs des Labyrinthdichtungsrings, wodurch der Labyrinthdichtungsring in die Montagestellung gebracht wird; Überschieben der Labyrinthdichtungsbuchse über die Dichtungsfläche, wobei die Dichtspitzen des Labyrinthdichtungsrings und der Dichtungsfläche außer Eingriff stehen; Herausziehen des Bolzens aus dem Durchgangsloch des Flansches und dem Steckloch des Labyrinthdichtungsrings, wodurch der Labyrinthdichtungsring von dem Vorspannmittel in die Betriebsstellung gebracht wird, so dass der Labyrinthdichtungsring und die Dichtungsfläche die Labyrinthdichtung bilden.

Um die Labyrinthdichtung in dem Labyrinthdichtungsträgerring ohne eine Teilfuge im Gehäuse realisieren zu können, werden zur Montage der Labyrinthdichtungsbuchse die Dichtspitzen der Segmente in der Labyrinthdichtungsbuchse radial nach außen verschoben, um ein Auffädeln auf die Dichtungsfläche zu ermöglichen. Nach der Montage werden die Segmente wieder radial nach innen verschoben, damit die Labyrinthdichtung eine hohe Dichtwirkung hat. Dadurch hat die Labyrinthdichtung eine geringe Leckagerate, wodurch der Wirkungsgrad der Strömungsmaschine hoch ist. Die radiale Bewegung des Segments wird konstruktiv derart ermöglicht, dass der Bolzen in Axialrichtung des Segments in das Durchgangsloch und das Steckloch gesteckt wird. Zur Montage werden die Segmente dann durch Hebelkraft nach außen geschoben. Nach erfolgter Montage wird der Bolzen wieder entfernt, wonach die Segmente durch das Vorspannmittel zu der radial einwärts gerichteten Rückstellung gebracht werden, um die Betriebsposition des Segments herzustellen.

Der Labyrinthdichtungsträgerring weist bevorzugt an seiner Innenseite einen umlaufenden, radial nach innen sich erstreckenden, anderen Flansch auf, der mit dem einen Flansch eine Nut ausbildet, in die der Labyrinthdichtungsring eingesetzt ist. Die Flansche weisen bevorzugt einander zugewandte Vorsprünge auf, so dass die Nut als eine T-Nut ausgebildet ist, und das Segment weist bevorzugt einen radial außen liegenden und in Umfangsrichtung verlaufenden Hammerkopf auf, der in die T-Nut formschlüssig eingreift. Von der T-Nut ist bevorzugt ein Radialspiel des Hammerkopfs derart definiert, dass der Hammerkopf an dem Grund der T-Nut radial nach außen abgestützt ist, wenn das Segment in der Montagestellung ist, und an den Vorsprüngen radial nach innen abgestützt ist, wenn das Segment in der Betriebsstellung ist.

Bevorzugtermaßen ist das Vorspannmittel eine Schraubenfeder. In den Segmenten ist bevorzugt in Umfangsrichtung sich erstreckend ein torusartiger Kanal vorgesehen, in dem die Schraubenfeder eingesetzt ist und in Umfangsrichtung gespannt ist, so dass mittels der Schraubenfeder das Segment in Radialrichtung nach innen vorgespannt ist. Als Alternative ist es bevorzugt, dass in den Segmenten jeweils mindestens ein radial nach außen offenes Sackloch vorgesehen ist, in das die Schraubenfeder eingesetzt ist und in Radialrichtung gespannt ist, so dass mittels der Schraubenfeder das Segment in Radialrichtung nach innen vorgespannt ist. Ferner ist es bevorzugt, dass der Labyrinthdichtungsträgerring an seiner Innenseite eine Mehrzahl von den Flanschen aufweist, die axial hintereinander liegend angeordnet sind und an denen jeweils einer der Labyrinthdichtungsringe vorgesehen ist, wobei die Durchgangslöcher der Flansche miteinander fluchtend angeordnet sind und die Stecklöcher in den Labyrinthdichtungsringen als Durchstecklöcher ausgebildet sind, so dass der Bolzen axial durch die hintereinander liegenden Durchgangslöcher der Flansche und die dazugehörigen Stecklöcher der Labyrinthdichtungsringe steckbar ist.

Das Durchgangsloch des Flanschs ist bevorzugt mit einem lösbaren Stopfen zum Verschließen des Durchgangslochs versehen. Dadurch ist es vorteilhaft unterbunden, dass während des Betriebs der Strömungsmaschine durch die Durchgangslöcher und der Stecklöcher eine Leckageströmung sich einstellen kann. Beispielsweise ist die Strömungsmaschine eine Dampfturbine. Das von der T-Nut definierte Radialspiel ist entsprechend bei der Konstruktion der Stopfbuchse der Dampfturbine vorzusehen.

Mit der erfindungsgemäßen Labyrinthdichtungsbuchse ist eine manuell durch das Einschieben des Bolzens hervorgerufene, radiale Bewegung der Segmente konstruktiv vorgesehen. Dadurch können über 360° geschlossene Labyrinthdichtungen auf die Welle montiert werden. Hieraus ergibt sich vorteilhaft eine verringerte Leckage über die Stopfbuchse, was zu einem verbesserten Gesamtwirkungsgrad führt. Außerdem können das Gehäuse der Strömungsmaschine oder Bestandteile davon als ein integrales Bauteil ohne eine Teilfuge ausgeführt werden, wobei dennoch die Labyrinthdichtung eine gute Dichtwirkung hat. Beispielsweise bei der Dampfturbine können im unbeschaufelten Bereich eines Innengehäuses oder eines Leitschaufelträgers integrale Ringe eingesetzt werden, die nach dem Aufschieben auf die Welle mit dem restlichen Innengehäuse verschraubt werden können. Dadurch, dass bei der Konstruktion des Gehäuses die Teilfuge verzichtbar ist, können kostengünstige Materialien zum Einsatz kommen und das Gehäuse kann insgesamt als gewichtssparend ausgeführt werden.

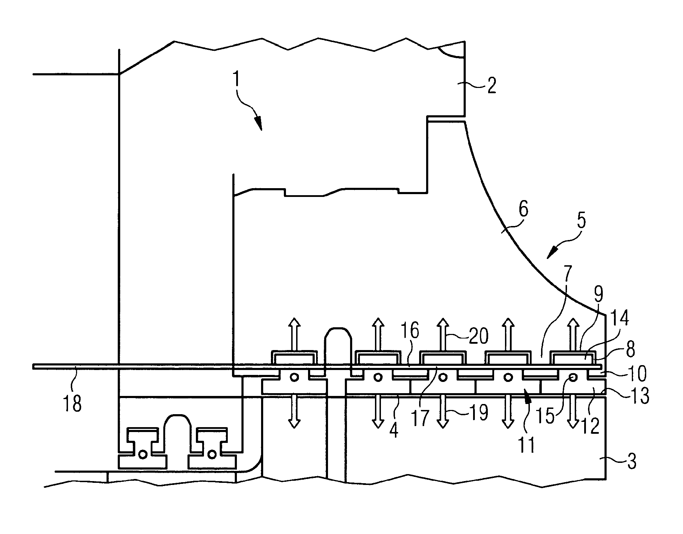

Im Folgenden wird eine bevorzugte Ausführungsform einer erfindungsgemäßen Strömungsmaschine mit einer erfindungsgemäßen Labyrinthdichtungsbuchse anhand der beigefügten schematischen Zeichnung erläutert. Fig. 1 zeigt einen Längsschnitt eines Längsendbereichs der erfindungsgemäßen Ausführungsform der Strömungsmaschine.

Wie es aus Fig. 1 ersichtlich ist, weist eine Strömungsmaschine 1 ein Gehäuse 2 und eine Welle 3 auf. Auf dem Längsendbereich der Welle 3 ist eine Dichtungsfläche 4 ausgebildet. Die Dichtungsfläche 4 umgreifend ist in dem Gehäuse 2 eine Labyrinthdichtungsbuchse 5 angebracht, wobei von der Dichtungsfläche 4 und der Labyrinthdichtungsbuchse 5 eine Labyrinthdichtung gebildet ist. Die Labyrinthdichtungsbuchse 5 weist einen Labyrinthdichtungsträgerring 6 auf, der in eine entsprechende Ausnehmung des Gehäuses 2 eingesetzt ist. Der Labyrinthdichtungsträgerring 6 umgreift die Dichtungsfläche 4 und hat in etwa die gleiche axiale Erstreckung wie die Dichtungsfläche 4. An der Innenseite des Labyrinthdichtungsträgerrings 6 sind fünf, axial nebeneinander liegende, umlaufende T-Nuten 8 ausgebildet, in die jeweils ein Labyrinthdichtungsring 11 eingesetzt ist. Jeder Labyrinthdichtungsring 11 weist an seinem radial außenseitigen Umfang einen Flansch 7 auf, der in seinem Querschnitt als ein Hammerkopf 14 ausgebildet ist. Der Hammerkopf 14 greift in seine ihm zugeordnete T-Nut 8 ein, so dass in Radialrichtung sowohl nach innen als auch nach außen der Labyrinthdichtungsring 11 in den Labyrinthdichtungsträgerring 6 festgelegt ist. Über den Umfang verteilt ist jeder Labyrinthdichtungsring 11 in mehrere Segmente 12 aufgeteilt.

Die T-Nut 8 weist ein Paar Vorsprünge 10 auf, die mit entsprechenden Einbuchtungen im Hammerkopf 14 korrespondieren. Ferner ist die T-Nut 8 radial nach außen durch ihren Nutgrund 9 begrenzt. Durch die Position des Nutgrunds 9 ist die maximale Radiallage des Segments 12 definiert. Hingegen ist die minimale Radiallage des Segments 12 durch die radial außen liegenden Flanken der Vorsprünge 10 und der radial innen liegenden Flanken der Einbuchtungen des Hammerkopfs 14 definiert. Dadurch ergibt sich für jedes Segment 12 ein maximal mögliches Radialspiel, im Rahmen dessen das Segment 12 in der T-Nut 8 beweglich ist. An der radial innen liegenden Seite weist jedes Segment 12 eine Mehrzahl an Dichtspitzen 13 auf, die mit der Dichtungsfläche 4 unter Ausbilden der Labyrinthdichtung zusammenwirken. Das Radialspiel ist derart definiert, dass, wenn die Segmente 12 radial innen liegend angeordnet sind, die Segmente 12 in ihrer Betriebsstellung sind. Sind die Segmente 12 radial außen liegend angeordnet, so befinden sie sich in ihrer Montagestellung, wodurch die Dichtspitzen 13 von der Dichtungsfläche 4 außer Eingriff stehen. Dadurch kann die Labyrinthdichtungsbuchse 5 über die Dichtungsfläche 4 geschoben werden, ohne dass die Dichtspitzen 13 sich verkanten oder Schaden nehmen.

In den Labyrinthdichtungsringen 11 ist über den Umfang laufend jeweils eine Schraubenfeder 15 vorgesehen, die die Segmente 12 radial nach innen mit einer Vorspannkraft beaufschlagen, die radial nach innen wirkt. Ferner weisen die Flansche 7 Stecklöcher 17 und der Labyrinthdichtungsträgerring 6 in den Flaschen 7 der T-Nuten 8 Durchgangslöcher 16 auf. Für die Segmente 12, die axial nebeneinander liegend angeordnet sind, sind die Durchgangslöcher 16 und die Stecklöcher 17 axial nebeneinander liegend angeordnet, wobei die Durchgangslöcher 16 und die Stecklöcher 17 miteinander in Axialrichtung fluchten. Hervorgerufen durch die Vorspannkraft der Schraubenfeder 15 sind die Segmente 12 in die Betriebsstellung 19 vorgespannt, wobei die Stecklöcher 17 etwas radial nach innen versetzt angeordnet sind, verglichen mit der Radialposition der Durchgangslöcher 16. Der radiale Versatz der Durchgangslöcher 16 und der Stecklöcher 17 ist derart gewählt, dass, wenn ein Bolzen 18 durch die Durchgangslöcher 16 und die Stecklöcher 17 gesteckt wird, die Segmente 1 in die Montagestellung 20 bewegt werden, wobei durch die Zentrierungswirkung des Bolzens 18 die Durchgangslöcher 16 und die Stecklöcher 17 exakt miteinander in Axialrichtung fluchten. In diesem Zustand kann die Labyrinthdichtungsbuchse 5 auf der Dichtungsfläche 4 axial verschoben werden, ohne dass die Dichtungsfläche 4 die Labyrinthdichtungsbuchse 5 berührt. Wird der Bolzen 18 wieder aus den Durchgangslöchern 16 und den Stecklöchern 17 in Axialrichtung herausgezogen, bewegen sich hervorgerufen durch die Vorspannkraft der Schraubenfeder 15 die Segmente 12 in ihre Betriebsstellung 19.

## Patentansprüche

1. Labyrinthdichtungsbuchse (5) für eine Strömungsmaschine (1),
mit einem Labyrinthdichtungsträgerring (6), der an seiner Innenseite einen umlaufenden, radial nach innen sich erstreckenden Flansch (7) aufweist, und einem Labyrinthdichtungsring (11), der über den Umfang aus mindestens einem Segment (12) zusammengesetzt ist,
wobei das Segment (12) des Labyrinthdichtungsrings (11) seitlich an dem Flansch (7) radial verschiebbar anliegt, wodurch das Segment (12) in eine Betriebsstellung und in eine Montagestellung bringbar ist, in der das Segment (12) bezogen auf die Betriebstellung radial nach außen versetzt ist, und an dem Labyrinthdichtungsträgerring (6) mit einem Vorspannmittel (15) radial nach innen vorgespannt abgestützt ist,
wobei der Flansch (7) ein in Axialrichtung sich erstreckendes Durchgangsloch (16) und der Labyrinthdichtungsring (11) ein Steckloch (17) aufweisen, das in der Montagestellung mit dem Durchgangsloch (16) fluchtend und in der Betriebsstellung bezogen auf das Durchgangsloch (16) radial nach innen versetzt angeordnet ist, so dass mittels eines Bolzen (18), der in das Durchgangsloch (16) und das Steckloch (17) gesteckt ist, das Segment (12) in der Montagestellung gehalten ist und, wenn der Bolzen (18) aus dem Steckloch (17) entfernt ist, das Segment (12) von dem Vorspannmittel (15) in die Betriebsstellung gedrückt ist.

2. Labyrinthdichtungsbuchse (5) gemäß Anspruch 1,
wobei der Labyrinthdichtungsträgerring (6) an seiner Innenseite einen umlaufenden, radial nach innen sich erstreckenden, anderen Flansch aufweist, der mit dem einen Flansch (7) eine Nut (8) ausbildet, in die der Labyrinthdichtungsring (11) eingesetzt ist.

3. Labyrinthdichtungsbuchse (5) gemäß Anspruch 2,
wobei die Flansche (7) einander zugewandte Vorsprünge (10) aufweisen, so dass die Nut als eine T-Nut (8) ausgebildet ist, und das Segment (12) einen radial außen liegenden und in Umfangsrichtung laufenden Hammerkopf (14) aufweist, der in die T-Nut (8) formschlüssig eingreift.

4. Labyrinthdichtungsbuchse (5) gemäß Anspruch 3,
wobei von der T-Nut (8) ein Radialspiel des Hammerkopfs (14) derart definiert ist, dass der Hammerkopf (14) an dem Grund der T-Nut (8) radial nach außen abgestützt ist, wenn das Segment (12) in der Montagestellung ist, und an den Vorsprüngen (10) radial nach innen abgestützt ist, wenn das Segment (12) in der Betriebsstellung ist.

5. Labyrinthdichtungsbuchse (5) gemäß einem der Ansprüche 1 bis 4,
wobei von das Vorspannmittel eine Schraubenfeder (15) ist.

6. Labyrinthdichtungsbuchse (5) gemäß Anspruch 5,
wobei in den Segmenten (12) in Umfangsrichtung sich erstreckend ein torusartiger Kanal vorgesehen ist, in den die Schraubenfeder (15) eingesetzt ist und in Umgangsrichtung gespannt ist, so dass mittels der Schraubenfeder (15) das Segment (12) in Radialrichtung nach innen vorgespannt ist.

7. Labyrinthdichtungsbuchse (5) gemäß Anspruch 5,
wobei in den Segmenten (12) jeweils mindestens ein radial nach außen offenes Sackloch vorgesehen ist, in das die Schraubenfeder eingesetzt ist und in Radialrichtung gespannt ist, so dass mittels der Schraubenfeder das Segment (12) in Radialrichtung nach innen vorgespannt ist.

8. Labyrinthdichtungsbuchse (5) gemäß einem der Ansprüche 1 bis 7,
wobei der Labyrinthdichtungsträgerring (6) an seiner Innenseite eine Mehrzahl von den Flanschen (7) aufweist, die axial hintereinander liegend angeordnet sind und an denen jeweils einer der Labyrinthdichtungsringe (11) vorgesehen ist,
wobei die Durchgangslöcher (16) der Flansche (7) miteinander fluchtend angeordnet sind und die Stecklöcher (17) in den Labyrinthdichtungsringen (11) als Durchstecklöcher ausgebildet sind, so dass der Bolzen (18) axial durch die hintereinander liegenden Durchgangslöcher (16) der Flansche (7) und die dazugehörigen Durchstecklöcher (17) der Labyrinthdichtungsringe (11) steckbar ist.

9. Labyrinthdichtungsbuchse (5) gemäß einem der Ansprüche 1 bis 8,
wobei das Durchgangsloch (16) und das Steckloch (17) in der Betriebsstellung derart zueinander versetzt angeordnet sind, so dass das Durchgangsloch (16) und das Steckloch (17) sich nicht überlappen,
wobei an dem Steckloch (17) eine Aussparung zum Führen des Bolzen (18) in das Steckloch (17) vorgesehen ist.

10. Strömungsmaschine mit einem Gehäuse mit einer Labyrinthdichtungsbuchse (5) gemäß einem der Ansprüche 1 bis 7 und
einer Welle (3) mit einer Dichtungsfläche (4), die zusammen mit der Labyrinthdichtungsbuchse (5) eine Labyrinthdichtung bildet,
wobei die Labyrinthdichtungsbuchse (5) radial nach innen sich erstreckende und umlaufende Dichtspitzen aufweist, die den radial nach außen sich erstreckenden und umlaufende Dichtspitzen der Dichtungsfläche (4) zugewandt angeordnet sind,
wobei die Dichtspitzen der Labyrinthdichtungsbuchse (5) mit denen der Dichtungsfläche (4) in der Montagestellung außer Eingriff stehen und in der Betriebsstellung in Eingriff stehen.

11. Strömungsmaschine gemäß Anspruch 10,
wobei das Durchgangsloch (16) des Flanschs (7) mit einem lösbaren Stopfen zum Verschließen des Durchgangslochs (16) versehen ist.

12. Verfahren zur Montage einer Labyrinthdichtung einer Strömungsmaschine gemäß Anspruch 9 oder 10,
mit den Schritten:
Bereitstellen der Labyrinthdichtungsbuchse (5) gemäß einem der Ansprüche 1 bis 9 und der Welle (3) mit der Dichtungsfläche (4);
Einschieben des Bolzens (18) in das Durchgangsloch (16) des Flansches (7) und des Stecklochs (17) des Labyrinthdichtungsrings (11), wodurch der Labyrinthdichtungsring (11) in die Montagestellung gebracht wird;
Überschieben der Labyrinthdichtungsbuchse (6) über die Dichtungsfläche (4), wobei die Dichtspitzen des Labyrinthdichtungsrings (11) und der Dichtungsfläche (4) außer Eingriff stehen;
Herausziehen des Bolzens (18) aus dem Durchgangsloch (16) des Flansches (7) und dem Steckloch (16) des Labyrinthdichtungsrings (4), wodurch der Labyrinthdichtungsring (11) von dem Vorspannmittel (15) in die Betriebsstellung gebracht wird, so dass der Labyrinthdichtungsring (11) und die Dichtungsfläche (4) die Labyrinthdichtung bilden.
